Europäisches Patentamt

European Patent Office

Office européen des brevets

(11) Publication number: **0 054 567**
**B1**

## (12) EUROPEAN PATENT SPECIFICATION

(45) Date of publication of patent specification: **13.05.87**

(51) Int. Cl.⁴: **F 02 B 43/10**

(21) Application number: **81901987.8**

(22) Date of filing: **25.06.81**

(86) International application number:
**PCT/US81/00871**

(87) International publication number:
**WO 82/00175 21.01.82 Gazette 82/03**

(54) INTERNAL COMBUSTION ENGINE.

(30) Priority: **30.06.80 US 164038**

(43) Date of publication of application:
**30.06.82 Bulletin 82/26**

(45) Publication of the grant of the patent:
**13.05.87 Bulletin 87/20**

(84) Designated Contracting States:
**AT CH DE FR GB LI NL SE**

(56) References cited:
**US-A-1 899 869**
**US-A-2 140 254**
**US-A-3 915 125**
**US-A-3 963 000**
**US-A-4 036 180**
**US-A-4 054 423**
**US-A-4 121 542**
**US-A-4 230 072**

(73) Proprietor: **VALDESPINO, Joseph M.**
**5023 Golf Club Parkway**
**Orlando, FL 32808 (US)**

(72) Inventor: **VALDESPINO, Joseph M.**
**5023 Golf Club Parkway**
**Orlando, FL 32808 (US)**

(74) Representative: **Finck, Dieter et al**
**Patentanwälte v. Füner, Ebbinghaus, Finck**
**Mariahilfplatz 2 & 3**
**D-8000 München 90 (DE)**

EP 0 054 567 B1

Courier Press, Leamington Spa, England.

## Description

The present invention relates to an internal combustion engine having fuel feed means for feeding a fuel-air mixture to said engine combustion chambers, auxiliary fuel storage means, auxiliary fuel feed means for feeding said auxiliary fuel from said fuel storage means to said internal combustion engine with said fuel-air mixture charge, electronic control means for metering said auxiliary fuel to said internal combustion engine, said electronic control means connected to said auxiliary fuel feed means for varying the amount of fuel being fed to said internal combustion engine, auxiliary fuel dissociation means, mixture leaning means for leaning said mixture below the normal operating range of said internal combustion engine without said auxiliary fuel feed; whereby the auxiliary fuel is partially dissociated using the waste heat of said engine and allows the engine to be leaned down to reduce the normal fuel requirements for operating the engine and a heat sensor for sensing the heat in the exhaust of said engine and connected with the electronic control means and where the mixture leaning means is responsive to said heat sensor sensing a predetermined temperature and to an internal combustion engine having fuel feed means for feeding a hydrocarbon fuel-air mixture to at least one combustion chamber, auxiliary fuel storage means, auxiliary fuel feed means for feeding said auxiliary fuel from said auxiliary fuel storage means to said engine combustion chamber with said fuel-air mixture charge, auxiliary fuel dissociation means, feed control valve means connected to said auxiliary fuel feed means for varying the rate of feed of said auxiliary fuel to said combustion chamber responsive to operating conditions of said internal combustion engine, leaning means for leaning the hydrocarbon fuel-air mixture of said internal combustion engine below the normal hydrocarbon fuel-air operating range, when the auxiliary fuel is being dissociated and fed from said auxiliary fuel storage means by said auxiliary fuel feed means to said internal combustion engine.

In the past, a variety of internal combustion engines have been provided and typically these engines have a system for feeding a hydrocarbon fuel, such as gasoline mixed with air, into the combustion chamber for running the engine. Such engines typically also have an electrical system which includes a generator or an alternator which may be connected through an electrical regulating circuit for charging a storage battery and for operating the electrical components of the engine of the vehicle. Internal combustion engines sometimes have hydrocarbon fuels mixed with air in a carburetor where the mixture is distributed into the combustion chambers of the engine. It is also typical to feed the air to the combustion chambers while using a fuel injection system for injecting fuel directly into the combustion chambers. The present invention can be adapted to operate with either a carburetor or fuel injection system.

A variety of hydrogen fueled engines have been suggested in the past, including those using combinations of hydrogen and oxygen, which in some cases are generated in an electrolytic cell having an electrolyte including solutions of salts, acids or bases in water. The electrolytic cell breaks the water down between hydrogen and oxygen through electrolysis and the hydrogen or the hydrogen and oxygen in combination can then be used to run the engine. The advantage of the hydrogen and oxygen fuel is that it is an efficient fuel which generates no pollution in that the combustion forms water in very minute quantities. Such engines, however, have not been brought into general use because of the inefficiency in the generation of hydrogen and oxygen through electrolysis which takes far more power than can be generated from the hydrogen and oxygen used as a fuel, even in high efficiency engines.

It has also been suggested to use small amounts of hydrogen added to the hydrocarbon fuel-air mixture to increase the efficiency or reduce the pollution of the internal combustion engine. US—A—3,906,913 discusses in detail the advantages of the use of small amounts of hydrogen with the hydrocarbon fuel-air mixture of a vehicle and points out that the advantages of reduced pollution and increased mileage result from running the engine much leaner than can otherwise be accomplished because the misfire limit for hydrocarbon fuels can be well exceeded. The carbon monoxide and other emissions have been found to decrease as the fuel-air ratio is made leaner and that if the fuel-air ratio can be sufficiently lean, it can be made substantially pollutant free. This patent shows a hydrogen generator and means to control the feed of the hydrogen to the engine so that the conventional fuel engine can be run very lean, well below where the engine would normally misfire as the engine approaches the flammability limit of fuel. The normal flammability limit for hydrocarbon fuel-air mixtures occurs with a relatively high $NO_x$ formation rate and thereby imposes severe limitations on the lean limit operation for the fuel. Since hydrogen exhibits a flammability limit well below that of conventional hydrocarbon fuels, it is possible to reduce the $NO_x$ simply by using the hydrogen to change the fuel-air mixture to a much leaner mixture than would normally be allowed. The extension of the misfire limit to very lean equivalence ratios with hydrogen fuel also yields significant increases in the thermodynamic efficiency of the combustion process, thereby allows a substantial increase in the mileage obtained on a conventional internal combustion fueled engine vehicle.

The difficulties in using hydrogen either as the sole fuel or in combination with a conventional internal combustion engine results from the hydrogen being a ubiquitous and very flammable gas, so that the storage increases the hazards of operating the engine and in the general inefficiency in generating the hydrogen such as through electrolysis on the vehicle.

The present invention is directed toward the use of an ammonia gas used in combination with a conventional hydrocarbon fuel-air mixture to increase the efficiency of the engine and to reduce pollution in the engine. Ammonia has been mentioned as a constituent of various types of fuels in the past, both for internal combustion engines and for jet propulsion. One such fuel is a liquid mixture of ammonious nitrate in liquid ammonia which is a self-sustaining fuel combination requiring no addition of an oxident such as air. Ammonia is also used to manufacture hydrozene, a well known rocket fuel, and while ammonia does not support combustion it will burn when mixed with oxygen in air to give a variety of products, principally nitrogen and water. Mixtures of nitrous oxide and ammonia in a rate of 3 to 2 will detonate with some violence yielding nitrogen and water.

One prior U.S. patent showing the use of ammonia as a constituent in fuel for internal combustion engines can be seen in US—A—2,559,605, for a fuel mixture for internal combustion engines. In this patent, ammonia gas is fed from one storage cylinder into a pressure reducing chamber and a second bottle containing an auxiliary gas, such as ethanized illuminating gas, is fed into a second expansion chamber and the two gases are then fed into a mixing chamber, and from the mixing chamber into a carburetor. This patent also discusses the use of carbon monoxide, methyl ether, ethyl ether, methyl amine and ethyl amine in combination with ammonia. In US—A—1,671,158 a fuel for use in internal combustion engines consists of a mixture of hydrocarbon distillates with ether and a highly volatile basic material, which may be ammonia. This mixture can then be used in internal combustion engines according to the patent. US—A—1,748,507, shows a process of reducing stable hydrocarbon oils in which ammonia or certain alkaline compounds are mixed with light hydrocarbon oils to prevent discoloration and sedimentation. In two of these U.S. patents, ammonia is used in small amounts in a fuel mixture, which may then be used as a fuel in an internal combustion engine, while in US—A—2,552,605, expanded ammonia gas is mixed with another gas to form a gaseous fuel mixture for running an internal combustion engine.

The advantage in using ammonia is that ammonia is useful as a convenient means for transporting small volumes of hydrogen since the gases obtained by decomposition contains 75% by volume of hydrogen and 25% by volume of nitrogen. The ammonia is easily liquefied either by cooling to below its normal boiling point of −33.42°C or by compression and can be stored in small compression cylinders. Ammonia can be thermally dissociated in the presence of certain catalysts to give nitrogen and hydrogen and dissociation can also be affected by photochemical means or by passing an electrical discharge through the gas. Ammonia can be obtained a number of ways, but is normally prepared synthetically by a modification of the Haber process using pressures between 200 and 1,000 atmospheres and temperatures between 400 and 500°C along with a variety of catalysts.

Further the US—A—2 140 254 teaches an internal combustion engine running on pure ammonia. The ammonia gas is combined with air without the use of a carburetor or fuel injection. A small portion of the ammonia (3,4—16,2%) is dissociated into hydrogen and nitrogen using the exhaust heat of the engine, presumably after the engine has heated up, for mixing with the bulk of the ammonia gas which is then fed to the engine.

US—A—4 230 072 teaches an internal combustion engine as defined in the pre-characterizing part of claim 1 and 8, which has a methanol reforming system for use in combination therewith. The reforming of the methanol produces hydrogen, even through this is less than 50% of the reformed alcohol and this is metered into a conventional hydrocarbon/air internal combustion engine. Methanol has substantially different characteristics than ammonia. It is a liquid at atmospheric pressure, where ammonia is a gas and must be stored under high pressure. The methanol needs a separate carburetor for vaporizing the methanol with air, and a separate low pressure ignition of the mixture is required to burn the methanol/air mixture, and this burned mixture is then fed to a reforming chamber which is formed in the exhaust system of the internal combustion engine using a catalyst to reform the burned methanol air mixture to produce a gas containing approximately 45% hydrogen, 26% nitrogen, 20% carbon monoxide, 3% methane, and 6% carbon dioxide, under ideal conditions. This presents special problems for the engine, one of whose major pollution problems is carbon monoxide.

In view of the above mentioned prior art it is the object underlying the invention to provide an internal combustion engine which shows no problems with respect to carbon monoxide.

This object is obtained with the internal combustion engine of the generic kind in that the auxiliary fuel consists of ammonia, the auxiliary fuel dissociation means dissociates most of said ammonia fuel into components of said ammonia fuel, and the electronic control means includes an electric throttle sensor for sensing the position of the throttle of the internal combustion engine, said throttle sensor being electrically connected to an electrically operated valve in the ammonia feeding line for actuating the electrically operated valve in accordance with the throttle sensor's sensed position of the throttle.

Advantageously said throttle sensor includes a potentiometer moved by a throttle linkage to thereby vary a voltage passing therethrough.

Preferably said throttle potentiometer controls an electrically operated valve for increasing feeding of air to said engine for leaning said internal combustion engine below the normal operating range of said internal combustion engine.

Said dissociation means may include heating means connected to the exhaust manifold system of said internal combustion engine for heating an ammonia fuel fed therethrough and catalyst means for contacting said ammonia fuel with said catalyst.

Said dissociation means may further include at least one chamber located inside the exhaust system of said engine and having a catalyst therein for dissociating an ammonia gas passing therethrough.

Said catalyst may contain iron or nickel.

The above-mentioned object is alternatively obtained with an internal combustion engine of the generic kind in that the auxiliary fuel consists of ammonia, the auxiliary fuel dissociation means substantially dissociates said ammonia into hydrogen and nitrogen whereby ammonia is fed into the combustion chamber substantially dissociated, said feed control valve means is connected to a throttle linkage of said internal combustion engine and actuated responsive to the movement of the throttle and comprises a throttle bracket which actuates a pair of valve elements to increase flow of gas and air as the throttle is moved to increase the feed of hydrocarbon fuel and air to said engine, said leaning means includes an air feed means for feeding additional air into said intake system of said engine and also includes feeding air mixed with ammonia and dissociated ammonia gas into the intake manifold of said engine, means are provided to switch said internal combustion engine back to a normal hydrocarbon fuel-air mixture when said dissociation means has insufficient heat to dissociate the ammonia and a preheater connected to said internal combustion engine cooling system is provided to preheat said ammonia prior to heating said ammonia in said dissociation means.

It is convenient that said dissociation means has heating means having a chamber mounted for the engine exhaust gases to pass therearound and having a connection for feeding ammonia in one end portion of said chamber and dissociated ammonia out of the other end portion of said chamber, said chamber having the catalyst therein.

Said catalyst may include iron or nickel.

It is preferable that the dissociating means is coupled to said internal combustion engine to heat ammonia passing therethrough above 300°C.

It is advantageous that said valve means and said air feed means are electrically controlled.

Conveniently said leaning means and said feed control valve means are actuated by control means upon said heat means and catalyst means dissociating ammonia.

The present invention advantageously can be adapted as an add-on to existing hydrocarbon fueled internal combustion engines as well as designed for new vehicles and allows a substantial increase in the mileage obtained from the hydrocarbon fuels and a reduction of at least certain pollutants in the exhaust of the vehicles and since the dissociated ammonia is metered in accordance with the requirements of the engine and the leaning of the engine can be similarly be controlled, the efficiency can be easily optimized for any particular internal combustion engine.

Other objects, features and advantages of the present invention will be apparent from the written description and the drawings in which:

Figure 1 is a diagrammatic view of an internal combustion engine fuel system in accordance with the present invention;

Figure 2 is a cutaway side elevation of a gas metering valve used in the embodiment of Figure 1;

Figure 3 is a side elevation of the throttle connection for the gas metering valve of Figure 2;

Figure 4 is a diagrammatical view of a second embodiment of the invention; and

Figure 5 is a circuit diagram for the electronic control of the valve shown in Figure 4.

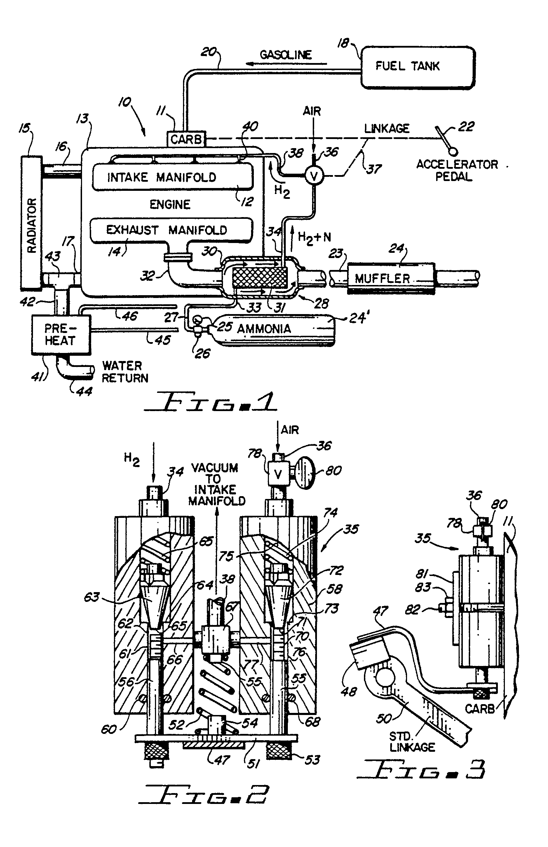

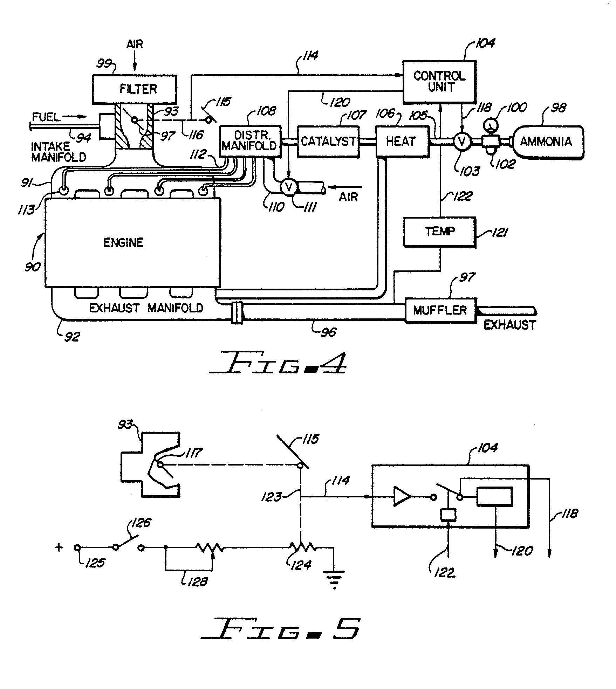

Referring to Figures 1 through 3 of the drawings, an internal combustion engine (10) is illustrated with a carburetor (11) feeding into an intake manifold connected to the engine block (13), which also has an exhaust manifold (14) connected thereto and a radiator (15) connected to the engine block (13) by water hoses (16, 17). The engine (10) is a standard internal combustion engine using refined hydrocarbon fuels fed from a fuel tank (18) through a gas line (20) to the carburetor (11), and connected by throttle linkage (21) to accelerator pedal (22) located in a vehicle. The exhaust from the exhaust manifold (14) is fed through the tailpipe (23) through a muffler (24) into the atmosphere, and in recent engines might include a catalytic converter as part of a pollution control package. The engine illustrated is a standard internal combustion engine of the type used in vehicles, but the present invention can be easily adapted to an engine having fuel injection rather than a carburetor or to a diesel engine burning oil rather than gasoline.

A tank of anhidrous ammonia (24') is attached to the engine (10) has a pressure gauge (25) and an ammonia safety release valve (26) attached to the ammonia tank (24'). The safety release valve is a spring loaded valve which will open momentarily when the pressure exceeds a predetermined pressure, such as 250 psi. Ammonia is stored in the ammonia storage tank (24') in a liquid state, but is fed in a gaseous or liquid state out a line (27) and in a gaseous state into an ammonia dissociator (28) having an enlarged cylinder (30) having a spaced inner cylindrical chamber (31) mounted therein so that exhaust gas coming out of the header (32) passes through the enlarged cylinder (30) into the tailpipe (23), around the inner chamber (31). The inner chamber (31) is filled with one or more catalysts from a group including iron, nickel, osmium, zinc and uranium. Typically, the catalyst might be iron and nickel, which may be in the form of steel wool, or the like, so that the gas entering the chamber (31) passes therethrough while being heated by the considerable heat of the engine exhaust, so as to utilize the waste exhaust heat for dissociation. In the presence of the catalyst, the dissociation of ammonia begins as low as 300°C and is nearly complete at 500—600°C. The ammonia gas enters the dissociator (28) at the input (33) at one end of the chamber (31) while passing through the catalyst. The catalyst baffles the gas and assists in the rapid heating of the gas passing therethrough. The gas in line (34) is substantially dissociated ammonia, 3 parts hydrogen and 1 part nitrogen, but would retain at least traces of ammonia with the disassociated gas. The dissociation of ammonia appears to be analogous to the reverse of the Haber process, which uses high pressure so that it is believed that the negative pressure generated by the intake manifold vacuum enhances the disassociation of the ammonia.

The gases in line (34) are fed to valve (35), the operation of which is shown more clearly in Figure 2. The valve (35) has an air input line (36) and is actuated from a linkage (37) connected to the throttle linkage (21) which is operated by the accelerator pedal (22). The gas from line (34) and the air from the air input line (36) are fed through a line (38) and through individual lines (40) into individual inputs to the intake manifold (12) so as to distribute the air mixed with the dissociated ammonia and any ammonia evenly into each cylinder. The air is fed through line (36) in a controlled ratio and is an easy method of leaning down the normal air to hydrocarbon fuel mixture of the carburetor (11). That is, the more air fed into line (36) and into the intake manifold, the leaner the intake mixture.

The amount of air being fed to the combustion chambers, as well as the amount of dissociated ammonia is actuated through a connection to the throttle linkage (21). The hydrogen input, as well as the amount of leaning, is varied in accordance with the operation of the throttle to give a more efficient mixture of hydrogen, hydrocarbon fuel and air. An alternate ammonia preheater (41) is illustrated connected to a water line (42) through a T-joint (43) connected in the water line (44) and back into the cooling system of the engine (10). An ammonia inlet line (45) can be connected to the line (27), pass through a coiled pipe or heat exchanger located in the preheater (41) where it is connected to the line (33) feeding into the dissociator (28). The preheater can remove the chill from the rapidly expanding ammonia gas and thereby reduce the total amount of heat that must be provided in the dissociator (28). A preheater can also be made in other ways such as wrapping the ammonia line around the tailpipe without departing from the scope of the invention.

Turning to Figure 2, the valve (35) is illustrated in more detail and has a throttle linkage connection member (47) connected to a throttle linkage member (48), attached to a standard linkage (50). The throttle linkage (47) abuts against a plate (51) which is spring loaded by spring (52) against stop nut (53). Spring (52) is held in place by members (54, 55). The pressing on the accelerator pedal pushes the throttle linkage (50) and bracket (58) to push the connecting bracket (47), which may be welded or bolted to the bracket (58) to push the plate (51) against spring (52), driving a pair of sliding rods (55, 56). Rod (46) rides in a gas feed housing (57) fed by line (34), as seen in Figure 1, while sliding rod (55) slides in a housing (58) fed by the air input line (36). Sliding rod (56) may have an O-ring seal (60) and a threaded adjusting rod (61) threaded into the shaft (56). The adjusting rod (61) slides in a chamber (62) and engages a truncated cone valve element (63), which operates in connection with the valve seat (64). The valve element (63) is spring loaded by a spring (65), so that raising or lowering the plate (51) raises or lowers the shaft (56), and threaded member (61) to push against the bottom (69) of the valve element (63) to drive the valve element (63) against the spring (65) thereby opening the valve in proportion to the movement of the throttle linkage to allow gas to pass around the valve seat (64) through a passageway (66) into a T-connection (67) and out line (38). Similarly, lifting of the plate (51) lifts the shaft (55) which has an O-ring seal (68) and a threaded adjusting member (70) which is then threaded into the shaft (55) and will push against the base (71) of a truncated cone valve element (72) operating in conjunction with valve seat (73). The valve element (72) is spring biased by spring (74) in a chamber (75). The shaft (70) passes through a smaller chamber (76) opening to a passageway (77) into the T-connection (67). This side of the valve also has an adjusting valve (78), adjusted with a handle (80) to provide a fixed adjustment for the flow of air from the pipe (36).

In operation, the accelerator pedal (22), of Figure 1, is operated in a normal manner, but drives the throttle linkage and thereby the bracket (47) attached to throttle plate (48) to raise and lower plate (51) to vary the input of hydrogen, nitrogen and any residual ammonia from the line (34) and the air from the air line (36) into the line (38), which is coupled into the individual intake manifold inlets. The valve (35) is supported by a bracket (81) and a bolt (82) and nut (83) to the carburetor (11).

It should be clear at this point that an ammonia, hydrocarbon fuel and air system has been provided for internal combustion engines. It should also be clear that the system can be adapted for fuel injection systems, and that the dissociator (28) and the catalyst do not have to be in the combined unit as illustrated in Figure 1, but can be separate units if desired. It should also be clear that a significant increase in the mileage obtained in a standard gasoline engine is believed to be due to the leaning of the engine below the normal misfire limits by the use of dissociated hydrogen, and that the leaned down engine is believed to provide significant improvement in the reduction of at least certain of the pollutants generated by the conventional internal combustion engine, even with the addition of added nitrogen to the engine from the dissociated ammonia. However, ammonia that has not dissociated, as well as added nitrogen, are believed to increase the benefits obtained in combustion.

Turning now to Figures 4 and 5, a third embodiment of the present invention is illustrated having an internal combustion engine (90) with an intake manifold (91), an exhaust manifold (92) and a standard carburetor (93), having a liquid hydrocarbon fuel line (94) feeding into a fuel bowl (95), forming part of the carburetor (93). Air is fed through an air filter (95) into the carburetor (93) and into the intake manifold (91) and thus into the combustion chambers of the internal combustion engine (90). While exhaust gases from the combustion chambers is fed through a tailpipe (96), a muffler (97) and into the atmosphere. An ammonia storage tank (98) stores ammonia in a liquefied state and has a pressure gauge (100) and ammonia safety release valve (101) which is adapted to momentarily open when the pressure exceeds the predetermined set pressure and to close after a short opening. The ammonia as a liquid or gas is fed from the tank (98) containing liquid ammonia through a line (102) through an electronically controlled fuel valve (103) which varies in accordance with the voltage applied thereto by a central electronic control (104). Ammonia passing through the valve (103) passes through a line (105) into the heating unit (106) capturing heat from the exhaust of the engine. The heating unit is located as close to the combustion cylinders as possible, and may be incorporated into the exhaust header. Ammonia gas also passes through a catalyst (107) which normally would be combined with the heating unit (106) as illustrated in connection with Figure 1. Ammonia gas from the catalyst (107) is fed into a distribution manifold (108) which is connected to an air inlet (110) through a second electronic controlled valve (111) which meters the air being fed to the distribution manifold (108). The combination of air and at least partially dissociated ammonia is fed through a plurality of gas lines (112) to individual manifold inlets (113) of the intake manifold (91). Thus, in this embodiment, the control unit (104) varies the valves (103, 111) to vary the amount of dissociated ammonia gas and air fed to the intake manifold, thereby varying the input of gas as well as leaning the engine in accordance with the control unit.

The control unit has an electrical conductor (114) which is connected to the accelerator pedal (115) which is connected to the throttle linkage (116) and to the throttle (117). Conductor (114) then feeds a signal that can vary the output voltage or signal through line (118) to the valve (103) and through the line (120) to the valve (111) to open the normally closed valves in proportion to the movement of the throttle. A temperature sensor (121) is inserted in the exhaust system, such as in the exhaust header, to produce a signal through the line (122) to the control unit (104).

The control unit (104) can be more clearly understood in connection with figure 5, in which the accelerator pedal (115) is connected through a linkage (123) to the movable contact of a potentiometer (124) which is connected from an electrical terminal (125) through the ignition switch (126) through the potentiometer (124) to a ground (127) to thereby vary the voltage in the line (114) to the control unit (104). A variable resistance (128) can be used to determine the minimum value of the signal of the moving contact of the potentiometer (124). The control unit (104) includes a standard amplifier for amplifying the signal from the line (114) as well as a relay or solenoid switch actuated by the thermal sensor (122). The thermal switch disables the control unit (104) until a sufficient temperature is reached in the exhaust manifold. This prevents ammonia and air from being fed to the unit until sufficient heat is available to dissociate a portion of the ammonia. A momentary delay circuit can momentarily delay the signal in the line (120) to the valve (111) to assure that the air and ammonia gas will reach the distribution manifold (108) at the same time, so as not to momentarily lean the engine (90) down, prior to dissociated ammonia being fed to the engine.

A simplified electrical control embodiment of the invention has been illustrated in connection with Figures 4 and 5, but it should be clear that the next generation control unit would typically include a microprocesser, receiving signals not only from the throttle, but may include an exhaust sensor which changes its electrical conductivity corresponding to the concentration of certain exhaust gases, oxygen or hydrogen over the sensor. In addition, exhaust gas control systems such as are commonly used on airplanes may be adapted for use in the control unit, along with sensors indicating engine speed and intake manifold pressure, which input signals can produce an optimum control of the feeding of dissociated ammonia and air to the engine (90) even if the desired feed in non linear. It should be clear that the feeding of air for leaning the engine (90) is easily accomplished for add-on units for adding onto existing internal combustion engines (90), but that the engine can also be leaned through specially designed carburetors without departing from the spirit and scope of the invention. A custom designed carburetor or fuel injection unit might also include the control of the feed of the ammonia with the fuel-air mixture leaned in a different manner without departing from the spirit and scope of the invention. Similarly, the control of the unit of a fuel injection engine can be operated in conjunction with the control of the injectors. It should also be clear that the engine can be switched over entirely to dissociated ammonia.

**Claims**

1. An internal combustion engine having
— fuel feed means for feeding a fuel-air mixture to said engine combustion chambers,
— auxiliary fuel storage means (98),
— auxiliary fuel feed means (103) for feeding said auxiliary fuel from said fuel storage means (98) to said internal combustion engine (90) with said fuel-air mixture charge,
— electronic control means (104) for metering said auxiliary fuel to said internal combustion engine (90), said electronic control means connected to said auxiliary fuel feed means (103) for varying the amount of fuel being fed to said internal combustion engine (90),

— auxiliary fuel dissociation means (106, 107),

— mixture leaning means (111) for leaning said mixture below the normal operating range of said internal combustion engine (90) without said auxiliary fuel feed; whereby the auxiliary fuel is partially dissociated using the waste heat of said engine and allows the engine to be leaned down to reduce the normal fuel requirements for operating the engine and

— a heat sensor (121) for sensing the heat in the exhaust of said engine and connected with the electronic control means (104) and where the mixture leaning means (111) is responsive to said heat sensor (121) sensing a predetermined temperature, characterized in

— that the auxiliary fuel consists of ammonia,

— that the auxiliary fuel dissociation means (106, 107) dissociates most of said ammonia fuel into components of said ammonia fuel, and

— that the electronic control means (104) includes an electric throttle sensor (124) for sensing the position of the throttle (117) of the internal combustion engine, said throttle sensor (124) being electrically connected to an electrically operated valve (103) in the ammonia feeding line (105) for actuating the electrically operated valve (103) in accordance with the throttle sensor's (124) sensed position of the throttle (117).

2. The apparatus in accordance with claim 1 in which said throttle sensor (124) includes a potentiometer moved by a throttle linkage to thereby vary a voltage passing therethrough.

3. The apparatus in accordance with claim 2 in which said throttle potentiometer (124) controls an electrically operated valve (111) for increasing feeding of air to said engine for leaning said internal combustion engine below the normal operating range of said internal combustion engine.

4. The apparatus in accordance with claim 1 in which said dissociation means (106, 107) includes heating means (106) connected to the exhaust manifold system (92) of said internal combustion engine (90) for heating an ammonia fuel fed therethrough and catalyst means (107) for contacting said ammonia fuel with said catalyst.

5. The apparatus in accordance with claim 4, in which said dissociation means includes at least one chamber (30) located inside the exhaust system of said engine and having a catalyst (31) therein for dissociating an ammonia gas passing therethrough.

6. The apparatus in accordance with claim 5, in which said catalyst (31) contains iron.

7. The apparatus in accordance with claim 5, in which said catalyst contains nickel.

8. An internal combustion engine having

— fuel feed means for feeding a hydrocarbon fuel-air mixture to at least one combustion chamber,

— auxiliary fuel storage means (24, 98),

— auxiliary fuel feed means (33, 31, 34, 38, 105, 106, 107, 108, 112) for feeding said auxiliary fuel from said auxiliary fuel storage means (24, 98) to said engine combustion chamber with said fuel-air mixture charge,

— auxiliary fuel dissociation means (30, 106, 107),

— feed control valve means (35, 103) connected to said auxiliary fuel feed means for varying the rate of feed of said auxiliary fuel to said combustion chamber responsive to operating conditions of said internal combustion engine,

— leaning means (36, 111) for leaning the hydrocarbon fuel-air mixture of said internal combustion engine below the normal hydrocarbon fuel-air operating range, when the auxiliary fuel is being dissociated and fed from said auxiliary fuel storage means (24, 98) by said auxiliary fuel feed means to said internal combustion engine, characterized in

— that the auxiliary fuel consists of ammonia,

— that the auxiliary fuel dissociation means (30, 106, 107) substantially dissociates said ammonia into hydrogen and nitrogen whereby ammonia is fed into the combustion chamber substantially dissociated,

— that said feed control valve means (35, 103) is connected to a throttle linkage of said internal combustion engine (10, 90) and actuated responsive to the movement of the throttle (22, 115) and comprises a throttle bracket (47) which actuates a pair of valve elements (63, 72) to increase flow of gas and air as the throttle (22) is moved to increase the feed of hydrocarbon fuel and air to said engine (10, 90),

— that said leaning means (36, 111) includes an air feed means (36, 111, 110) for feeding additional air into said intake system of said engine and also includes feeding air mixed with ammonia and dissociated ammonia gas into the intake manifold of said engine,

— that means (121, 104) are provided to switch said internal combustion engine back to a normal hydrocarbon fuel-air mixture when said dissociation means has insufficient heat to dissociate the ammonia, and

— that a preheater (41) connected to said internal combustion engine cooling system is provided to preheat said ammonia prior to heating said ammonia in said dissociation means (30, 106).

9. An internal combustion engine in accordance with claim 8, in which dissociation means (30, 106, 107) has heating means (30, 106) having a chamber (31) mounted for the engine exhaust gases to pass therearound and having a connection for feeding ammonia in one end portion of said chamber and dissociated ammonia out of the other end portion of said chamber, said chamber having the catalyst therein.

10. An internal combustion engine in accordance with claim 9, in which said catalyst includes iron.

11. An internal combustion engine in accordance with claim 9, in which said catalyst includes nickel.

12. An internal combustion engine in accordance with claim 11, in which the dissociating means (30, 106, 107) is coupled to said internal combustion engine to heat ammonia passing therethrough above 300°C.

13. An internal combustion engine in accordance with claim 8, in which said valve means (35, 103) and said air feed means (36, 111, 110) are electrically controlled.

14. An internal combustion engine in accordance with claim 9, in which said leaning means (36, 111) and said feed control valve means (35, 103) are actuated by control means (104) upon said heat means (30, 106) and catalyst means (31, 107) dissociating ammonia.

**Patentansprüche**

1. Verbrennungsmotor mit
— einer Kraftstoffzuführungseinrichtung zum Zuführen eines Kraftstoff-Luft-Gemisches zu den Motor-Verbrennungsräumen,
— einer zusätzlichen Kraftstoffspeichereinrichtung (98),
— einer zusätzlichen Kraftstoffzuführungseinrichtung (103) zum Zuführen des zusätzlichen Kraftstoffs aus der zusätzlichen Kraftstoffspeichereinrichtung (98) zusammen mit der erwähnten Kraftstoff-Luft-Gemischbeschickung zum Verbrennungsmotor (90),
— einer elektronischen Steuereinrichtung (104), die den zusätzlichen Kraftstoff dem Verbrennungsmotor (90) zumißt, wobei die elektronische Steuereinrichtung mit der zusätzlichen Kraftstoffzuführungseinrichtung (103) verbunden ist, um die dem Verbrennungsmotor (90) zugeführte Menge an Kraftstoff zu verändern,
— einer zusätzlichen Kraftstoff-Dissoziationseinrichtung (106, 107),
— einer Gemischabmagerungseinrichtung (111) zum Abmagern des Gemischs bis unter den normalen Betriebsbereich des Verbrennungsmotors (90) ohne der zusätzlichen Kraftstoffzuführung; wobei der zusätzliche Kraftstoff unter Verwendung der Abwärme des Motors teilweise dissoziiert wird und es dem Motor erlaubt, abgemagert zu werden, um den für den Betrieb des Motors normalen Kraftstoffbedarf herabzusetzen, und mit
— einem Wärmesensor (121) zum Messen der Wärme im Abgas des Motors, der mit der elektronischen Steuereinrichtung (104) verbunden ist, wobei die Gemischabmagerungseinrichtung (111) auf den Wärmesensor (121) anspricht, der eine vorbestimmte Temperatur mißt, dadurch gekennzeichnet,
— daß der zusätzliche Kraftstoff aus Ammoniak besteht,
— daß die zusätzliche Kraftstoff-Dissoziationseinrichtung (106, 107) den Ammoniak-Kraftstoff zum größten Teil in Komponenten des Ammoniak-Kraftstoffs dissoziiert, und
— daß die elektronische Steuereinrichtung (104) einen elektrischen Drosselklappen-Sensor (124) aufweist, der die Stellung der Drosselklappe (117) des Verbrennungsmotors feststellt, wobei der Drosselklappen-Sensor (124) elektrisch mit einem elektrisch betätigten Ventil (103) in der Ammoniak-Zuführungsleitung (105) verbunden ist, um das elektrisch betätigte Ventil (103) in Übereinstimmung mit der vom Drosselklappen-Sensor (124) festgestellten Stellung der Drosselklappe (117) zu betätigen.

2. Vorrichtung nach Anspruch 1, wobei der Drosselklappen-Sensor (124) ein Potentiometer aufweist, das von einem Drosselklappen-Gestänge bewegt wird, um eine daran angelegte Spannung zu ändern.

3. Vorrichtung nach Anspruch 2, wobei das Drosselklappen-Potentiometer (124) ein elektrisch betätigtes Ventil (111) steuert, um die Zufuhr von Luft zum Motor anzuheben, damit der Verbrennungmotor bis unter den normalen Betriebsbereich des Verbrennungsmotors abgemagert werden kann.

4. Vorrichtung nach Anspruch 1, wobei die Dissoziationseinrichtung (106, 107) eine Heizung (106), die zum Aufheizen eines dadurch hindurchgeführten Ammoniak-Kraftstoffs mit dem Auspuff (92) des Verbrennungsmotors (90) verbunden ist, und einen Katalysator (107) zum in-Kontakt-bringen des Ammoniak-Kraftstoffs mit dem Katalysator aufweist.

5. Vorrichtung nach Anspruch 4, wobei die Dissoziationseinrichtung wenigstens einen Raum (30) aufweist, der innerhalb des Auspuffsystems des Motors angeordnet ist und einen Katalysator (31) für die Dissoziierung eines durchströmenden Ammoniakgases enthält.

6. Vorrichtung nach Anspruch 5, wobei der Katalysator Eisen enthält.

7. Vorrichtung nach Anspruch 5, wobei der Katalysator Nickel enthält.

8. Verbrennungsmotor mit
— einer Kraftstoffzuführungseinrichtung zum Zuführen eines Kohlenwasserstoffkraftstoff-Luft-Gemisches zu wenigstens einem Verbrennungsraum,
— einer zusätzlichen Kraftstoffspeichereinrichtung (24, 98),
— einer zusätzlichen Kraftstoffzuführungseinrichtung (33, 31, 34, 38, 105, 106, 107, 108, 112) zum Zuführen des zusätzlichen Kraftstoffs aus der zusätzlichen Kraftstoffspeichereinrichtung (24, 98) zusammen mit der erwähnten Kraftstoff-Luft-Gemischbeschickung an den Motor-Verbrennungsraum,
— einer zusätzlichen Kraftstoff-Dissoziationseinrichtung (30, 106, 107),
— einem Zuführungs-Steuerventil (35, 103), das mit der zusätzlichen Kraftstoffzuführungseinrichtung zur Änderung der Zuführungsrate des zusätzlichen Kraftstoffs in den Verbrennungsraum in Reaktion auf Betriebsbedingungen des Verbrennungsmotors verbunden ist,
— einer Abmagerungseinrichtung (36, 111) zum Abmagern das Kohlenwasserstoffkraftstoff-Luft-Gemisches des Verbrennungsmotors unter den normalen Kohlenwasserstoffkraftstoff-Luft-Betriebsbereich, wobei der zusätzliche Kraftstoff dissoziiert wird und aus der zusätzlichen Kraftstoffspeichereinrichtung (24, 98) durch die zusätzliche Kraftstoffzuführungseinrichtung an den Verbrennungsmotor zugeführt wird, dadurch gekennzeichnet,

— daß der zusätzliche Kraftstoff aus Ammoniak besteht,

— daß die zusätzliche Kraftstoff-Dissoziationseinrichtung (30, 106, 107) im wesentlichen das Ammoniak in Wasserstoff und Stickstoff dissoziiert, wodurch Ammoniak im wesentlichen dissoziiert in den Verbrennungsraum zugeführt wird,

— daß das Zuführungs-Steuerventil (35, 103) mit einem Drosselklappengestänge des Verbrennungsmotors (10, 90) verbunden ist und ansprechend auf die Bewegung der Drosselklappe (22, 115) betätigt wird, und daß es einen Drosselklappen-Verbindungshebel (47) aufweist, der ein Paar von Ventilelementen (63, 72) betätigt, um den Zufluß von Gas und Luft zu erhöhen, wenn die Drosselklappe (22) bewegt wird, um die Zuführung von Kohlenwasserstoffkraftstoff und Luft zum Motor (10, 90) zu erhöhen,

— daß die Abmagerungseinrichtung (36, 111) eine Luftzuführungseinrichtung (36, 111, 110) zur Zuführung von zusätzlicher Luft in das Ansaugsystem des Motors und auch die Zuführung von Luft gemischt mit Ammoniak und dissoziiertem Ammoniakgas in den Ansaugkrümmer des Motors aufweist,

— daß eine Einrichtung (121, 104) vorgesehen ist, die den Verbrennungsmotor auf ein normales Kohlenwasserstoffkraftstoff-Luft-Gemisch zurückschaltet, wenn die Dissoziationseinrichtung eine zur Dissoziation des Ammoniaks ungenügende Erwärmung aufweist, und

— daß eine Vorheizung (41) vorgesehen ist, die an das Kühlsystem des Verbrennungsmotors angeschlossen ist, um das Ammoniak vor der Aufheizung in der Dissoziationseinrichtung (30, 106) zu erwärmen.

9. Verbrennungsmotor nach Anspruch 8, wobei die Dissoziationseinrichtung (30, 106, 107) eine Heizung (30, 106) mit einem Raum (31) aufweist, der so angeordnet ist, daß die Auspuffgase des Motors darum herumströmen, und der eine Verbindung zur Zuführung von Ammoniak in einen Endabschnitt des Raumes und von dissoziiertem Ammoniak aus dem anderen Endabschnitt des Raumes hat, wobei der Raum den Katalysator enthält.

10. Verbrennungsmotor nach Anspruch 9, wobei der Katalysator Eisen enthält.

11. Verbrennungsmotor nach Anspruch 9, wobei der Katalysator Nickel enthält.

12. Verbrennungsmotor nach Anspruch 11, wobei die Dissoziationseinrichtung (30, 106, 107) mit dem Verbrennungsmotor verbunden ist, um hindurchströmendes Ammoniak auf über 300°C aufzuheizen.

13. Verbrennungsmotor nach Anspruch 8, wobei das Ventil (35, 103) und die Luftzuführungseinrichtung (36, 111, 110) elektrisch gesteuert sind.

14. Verbrennungsmotor nach Anspruch 9, wobei die Abmagerungseinrichtung (36, 111) und das Zuführungs-Steuerventil (35, 103) durch eine Steuereinrichtung (104) betätigt werden, wenn die Heizung (30, 106) und der Katalysator (31, 107) Ammoniak dissoziieren.

## Revendications

1. Moteur à combustion interne comprenant:
— des moyens d'alimentation en carburant permettant d'amener un mélange air-carburant aux chambres de combustion du moteur,
— un réservoir de carburant auxiliaire (98),
— des moyens d'alimentation en carburant auxiliaire (103) permettant d'amener le carburant auxiliaire depuis ce réservoir (98) jusqu'au moteur à combustion interne (90) en même temps que la charge de mélange air-carburant,
— des moyens électroniques de commande (104) permettant de doser le carburant auxiliaire envoyé au moteur à combustion interne (90), ces moyens électroniques de commande étant reliés au moyens d'alimentation en carburant auxiliaire (103) pour faire varier la quantité de carburant fournie au moteur à combustion interne (90),
— des moyens de dissociation de carburant auxiliaire (106, 107),
— des moyens d'appauvrissement de mélange (111) permettant d'appauvrir ledit mélange au-dessous du domaine de fonctionnement normal du moteur à combustion interne (90) sans alimentation en carburant auxiliaire, de sorte que le carburant auxiliaire est partiellement dissocié en utilisant la chaleur perdue du moteur et permet à ce moteur d'être appauvri de façon à réduire la consommation normale de carburant faisant fonctionner le moteur et
— une sonde de température (121) permettant de détecter la chaleur dans l'échappement du moteur et reliée aux moyens électroniques de commande (104), les moyens d'appauvrissement en mélange (111) étant actionnés par cette sonde (121) détectant une température préfixée, caractérisé en ce que
— le carburant auxiliaire est constitué par de l'ammoniac,
— les moyens de dissociation du carburant auxiliaire (106, 107) dissocient la plus grande partie de cet ammoniac carburant en des composants dudit ammoniac carburant, et
— les moyens électroniques de commande (104) comprennent un capteur électrique de papillon (124) permettant de détecter la position du papillon des gaz (117) du moteur à combustion interne, ce capteur de papillon (124) étant relié électriquement à une électrovanne (103) située dans la tuyauterie d'alimentation en ammoniac (105) de façon à manoeuvrer l'électrovanne (103) en fonction de la position du papillon des gaz (117) détectée par le capteur de papillon (124).

2. Appareil selon la revendication 1, dans lequel le capteur de papillon (124) comprend un potentiomètre déplacé par une tringlerie de papillon des gaz de façon à faire ainsi varier une tension le traversant.

3. Appareil selon la revendication 2, dans lequel le potentiomètre de papillon (124) commande une électrovanne (111) permettant d'accroître l'alimentation en air vers le moteur afin d'appauvrir ce moteur à combustion interne au-dessous du domaine de fonctionnement normal de ce moteur à combustion interne.

4. Appareil selon la revendication 1, dans lequel les moyens de dissociation (106, 107) comprennent des moyens de chauffage (106) reliés au système de collecteur d'échappement (92) du moteur à combustion interne (90) afin de chauffer l'ammoniac-carburant le traversant, et un dispositif catalyseur (107) permettant de mettre cet ammoniac carburant au contact du catalyseur.

5. Appareil selon la revendication 4, dans lequel les moyens de dissociation comprennent au moins une chambre (30) disposée à l'intérieur du système d'échappement du moteur et ayant dedans un catalyseur (31) pour dissocier du gaz ammoniac le traversant.

6. Appareil selon la revendication 5, dans lequel le catalyseur (31) contient du fer.

7. Appareil selon la revendication 5, dans lequel le catalyseur contient du nickel.

8. Moteur à combustion interne comprenant:
— des moyens d'alimentation en carburant permettant d'amener un mélange air-hydrocarbure carburant à au moins une chambre de combustion,
— un réservoir de carburant auxiliaire (24, 98),
— des moyens d'alimentation en carburant auxiliaire (33, 31, 34, 38, 105, 106, 107, 108, 112) permettant d'amener ce carburant auxiliaire depuis le réservoir de carburant auxiliaire (24, 98) jusqu'à ladite chambre de combustion du moteur en même temps que la charge de mélange air-carburant,
— des moyens de dissociation du carburant auxiliaire (30, 106, 107),
— une vanne de commande d'alimentation (35, 103) reliée aux moyens d'alimentation en carburant auxiliaire de façon à faire varier le débit d'alimentation en carburant auxiliaire vers la chambre de combustion sous l'effet des conditions de fonctionnement du moteur à combustion interne,
— des moyens d'appauvrissement (36, 111) permettant d'appauvrir le mélange air-hydrocarbure carburant du moteur à combustion interne au-dessous du domaine normale de fonctionnement air-hydrocarbure carburant, lorsque le carburant auxiliaire est dissocié et envoyé, à l'aide des moyens d'alimentation en carburant auxiliaire, du réservoir de carburant auxiliaire (24, 98) vers le moteur à combustion interne, caractérisé en ce que:
— le carburant auxiliaire est constitué d'ammoniac,
— les moyens de dissociation du carburant auxiliaire (30, 106, 107) dissocient d'une manière notable l'ammoniac en hydrogène et azote, de sorte que l'ammoniac est amené à la chambre de combustion sous forme sensiblement dissociée,
— la vanne de commande d'alimentation (35, 103) est reliée à une tringlerie de papillon du moteur à combustion interne (10, 90) et est actionnée sous l'effet du mouvement du papillon des gaz (22, 115) et elle comporte une ferrure de papillon (47) qui actionne une paire d'éléments de valve (63, 72) de façon à accroître le débit de gaz et d'air lorsque le papillon (22) se déplace de façon à accroître l'alimentation du moteur (10, 90) en hydrocarbure carburant et air,
— les moyens d'appauvrissement (36, 111) comprennent des moyens d'alimentation en air (36, 111, 110) permettant d'amener de l'air supplémentaire dans le système d'admission du moteur et comprennent également une alimentation d'air mélangé avec de l'ammoniac et du gaz ammoniac dissocié dans le collecteur d'admission du moteur,
— il est prévu des moyens (121, 124) pour refaire passer le moteur à combustion interne à un mélange normal air-hydrocarbure carburant lorsque les moyens de dissociation ont une chaleur insuffisante pour dissocier l'ammoniac, et
— il est prévu un réchauffeur (41), relié au système de refroidissement du moteur à combustion interne, pour préchauffer l'ammoniac avant de chauffer cet ammoniac dans les moyens de dissociation (30, 106).

9. Moteur à combustion interne selon la revendication 8, dans lequel les moyens de dissociation (30, 106, 107) comprennent des moyens de chauffage (30, 106) comportant une chambre (31) disposée de façon que les gaz d'échappement du moteur passent autour d'elle, et comportant une liaison permettant l'amenée d'ammoniac dans une partie extréme de cette chambre et une extraction de l'ammoniac dissocié hors de l'autre partie extréme de la chambre, le catalyseur étant logé dans cette chambre.

10. Moteur à combustion interne selon la revendication 9, dans lequel le catalyseur comprend du fer.

11. Moteur à combustion interne selon la revendication 9, dans lequel le catalyseur comprend du nickel.

12. Moteur à combustion interne selon la revendication 11, dans lequel les moyens de dissociation (30, 106, 107) sont couplés au moteur à combustion interne de façon à porter au-dessus de 300°C l'ammoniac les traversant.

13. Moteur à combustion interne selon la revendication 8, dans lequel la vanne (35, 103) et les moyens d'alimentation en air (36, 111, 110) sont à commande électrique.

14. Moteur à combustion interne selon la revendication 9, dans lequel les moyens d'appauvrissement (36, 111) et la vanne de commande d'alimentation (35, 103) sont actionnés par des moyens de commande (104) sur les moyens de chauffage (30, 106) et le dispositif catalyseur (31, 107) dissociant l'ammoniac.

FIG.1

FIG.2

FIG.3

Fig-4

Fig-5